# EUROPÄISCHE PATENTSCHRIFT

(11) **EP 3 245 499 B1**
(45) Veröffentlichungstag und Bekanntmachung des Hinweises auf die Patenterteilung: **11.08.2021**
(21) Anmeldenummer: 16700564.4
(22) Anmeldetag: 13.01.2016
(51) Int. Cl.: G01N 11/16, F16J 15/40

(54) **DRUCKZELLE FÜR RHEOLOGISCHE EXPERIMENTE IN OSZILLATORISCHER SCHERUNG UNTER DRUCK**
PRESSURE CELL FOR RHEOLOGICAL EXPERIMENTS IN OSCILLATORY SHEAR UNDER PRESSURE
CELLULE D'IMPRESSION POUR EXPÉRIENCE RHÉOLOGIQUE DANS UNE ZONE DE CISAILLEMENT OSCILLATOIRE SOUS PRESSION

(30) Priorität: 16.01.2015 EP 15151531
(43) Veröffentlichungstag der Anmeldung: 22.11.2017
(73) Patentinhaber: Waters GmbH, 65760 Eschborn (DE)
(72) Erfinder: NOWAK, Maik, 67063 Ludwigshafen (DE); SCHULER, Peter, 67071 Ludwigshafen (DE); SIGGEL, Lorenz, 69121 Heidelberg (DE)
(74) Vertreter: Forresters IP LLP
(86) Internationale Anmeldenummer: PCT/EP2016/050520
(87) Internationale Veröffentlichungsnummer: WO 2016/113279

(56) Entgegenhaltungen:
- EP-A1- 1 260 808
- WO-A1-97/42482
- DE-A1- 3 722 862
- US-A1- 2013 226 473

## Beschreibung

### Gebiet der Erfindung

Die vorliegende Erfindung betrifft eine Messvorrichtung zur Messung einer Elastizität und einer Viskosität eines Mediums, die eine Messung der Elastizität und der Viskosität des Mediums auch bei hohen Drücken bzw. hohen Temperaturen ermöglicht. Insbesondere betrifft die Erfindung eine Vorrichtung zur Messung von Elastizitäten von niederviskosen Flüssigkeiten bei hohen Drücken und hohen Temperaturen.

### Hintergrund der Erfindung

Viskositätsmessungen sind aus dem Stand der Technik bekannt, etwa durch die Messung eines Druckverlustes, einer Strömung durch eine Kapillare oder durch die Messung einer Dämpfung einer Schwingung eines eingetauchten Fühlers. Ferner sind Rotationsrheometer zur Messung von Viskositäten bekannt. Mit derartigen Messverfahren und Messvorrichtungen ist es zwar möglich die Viskosität zu messen, mitunter auch bei hohen Temperaturen und hohen Drücken, jedoch ist es mit derartigen Messungen nicht möglich elastische Eigenschaften bei gleichzeitig niedriger Viskosität zu messen. Die Druckschriften WO97/42482 A1, EP 1260808 A1, US 2013/0226473 A1 und DE 3722862 A2 offenbaren bekannte Viskosimeter aus dem Stand der Technik.

### Zusammenfassung der Erfindung

Es kann daher als eine Aufgabe der Erfindung betrachtet werden, eine Vorrichtung zur Messung von Elastizitäten eines Mediums bei hohen Drücken bzw. hohen Temperaturen bereitzustellen, insbesondere eine Vorrichtung zur Messung von Elastizitäten von niederviskosen Flüssigkeiten bei hohen Drücken und hohen Temperaturen.

Die Aufgabe der vorliegenden Erfindung wird gelöst durch den Gegenstand der unabhängigen Ansprüche, während vorteilhafte Weiterbildungen der Erfindung durch die abhängigen Ansprüche verkörpert werden.

Gemäß einer Ausführungsform der Erfindung wird eine Messvorrichtung zur Messung einer Elastizität und einer Viskosität eines Mediums bereitgestellt, wobei die Messvorrichtung ein durch einen ersten Messvorrichtungsteil begrenztes Volumen zur Aufnahme des zu messenden Mediums aufweist, sowie einen in das Volumen einragenden zweiten Messvorrichtungsteil, wobei der erste Messvorrichtungsteil zu dem zweiten Messvorrichtungsteil durch eine Gasströmungsdichtung abgedichtet ist, wobei der erste Messvorrichtungsteil zu dem zweiten Messvorrichtungsteil relativ um eine vorgegebene Achse in einer Drehbewegung bewegbar ist.

Auf diese Weise ist es möglich, den ersten Messvorrichtungsteil und den zweiten Messvorrichtungsteil bedingt durch die Gasströmungsdichtung derart zueinander abzudichten, dass sich der erste Messvorrichtungsteil und der zweite Messvorrichtungsteil zueinander verdrehen können, um auf der Grundlage dieser Drehbewegung eine Elastizität bzw. eine Viskosität eines Mediums zu ermitteln, welches sich in einem entsprechenden Volumen zur Aufnahme des zu messenden Mediums befindet. Die Gasströmungsdichtung ermöglicht es, eine möglichst reibungsarme bzw. im Wesentlichen reibungsfreie Abdichtung der beiden Messvorrichtungsteile zueinander bereitzustellen, um einen hohen Druck innerhalb des Volumens aufrecht zu erhalten, so dass in dem Volumen das zu messende Medium auch unter hohen Drücken bzw. unter hohen Temperaturen gehalten werden kann, ohne die Beweglichkeit des ersten Messvorrichtungsteils und des zweiten Messvorrichtungsteils zueinander signifikant zu beeinträchtigen. Unter hohen Temperaturen werden im Sinne der Erfindung Temperaturen bis ca 200°C verstanden und unter hohen Drücken werden im Sinne der Erfindung Drücke bis ca 16 bar (absolut) verstanden.

Die Gasströmungsdichtung erlaubt eine Abdichtung des Volumens, sodass das darin befindliche Medium auch unter hohen Drücken und Temperaturen gemessen werden kann, ohne jedoch eine Drehmomentmessung durch eine Feststoffdichtung einzuschränken oder zu verfälschen. Eine Gasströmungsdichtung zeichnet sich durch eine Dreiwegekonstruktion aus, wobei ein Weg im abzudichtenden Volumen endet und die beiden anderen Wege der Gaszuführung bzw. der Gasabführung dienen. Die Dichtungswirkung wird durch einen Staudruck im ersten Weg erreicht, der durch die Durchströmung vom zweiten in den dritten Weg mit Gas erzeugt wird. Der erste Weg ist mit dem Volumen verbunden, sodass im Volumen in der Regel keine Gasströmung vorliegt. In dem Volumen befindet sich dabei die zu messende Probe, wobei das Volumen von dem ersten und zweiten Messteil begrenzt ist und mit einer Gasströmungsdichtung abgedichtet ist. Das durch den ersten und zweiten Messvorrichtungsteil begrenzte Volumen ist dazu ausgelegt, darin eine Viskositätsmessung bzw. eine Elastizitätsmessung vorzunehmen. Die Gasströmung dient dabei der Abdichtung, wobei das Volumen, welches die zu messende Probe aufnimmt, selbst im Allgemeinen nicht luftdurchströmt ist. Das Volumen nimmt vielmehr die zu messende Flüssigkeit auf und hält die Flüssigkeit. Im Gegensatz zu einer Luftlagerung, bei der es zu einem permanenten Durchströmen des Grenzvolumens kommt, stellt sich bei einer Gasströmungsdichtung im Inneren des Messvolumens ein statischer Druck ein. Anders als bei einer Luftlagerung von rotierenden Teilen, bei der eine Lagerung enge Spaltmaße erfordert, dichtet die Gasströmungsdichtung ein Volumen zum Aufnehmen eines Probenmediums gegenüber der Außenatmosphäre ab. Eine Gasströmungsdichtung ermöglicht ferner durch das dynamische Strömungsdichtprinzip die peripheren Aggregate, wie Antriebe und Messvorrichtungen außerhalb eines Druckbereiches zu halten, was bei einer Gegendruckdichtung mit einem statisch Druck nicht ohne Weiteres möglich ist.

Gemäß einer Ausführungsform der Erfindung ist das Volumen in einem Bereich, der zur Aufnahme des zu messenden Mediums vorgesehen ist, rotationssymmetrisch, und der zweite Messvorrichtungsteil im Bereich, der in den Bereich des Volumens einragt, der zur Aufnahme des zu messenden Mediums vorgesehen ist, rotationssymmetrisch, wobei der erste Messvorrichtungsteil einen Hohlzylinderabschnitt und der zweite Messvorrichtungsteil einen Zylinderabschnitt aufweist, wobei der Hohlzylinderabschnitt und der Zylinderabschnitt in einem Bereich, der zur Aufnahme eines zu messenden Mediums vorgesehen ist, einen Zylinderspalt bilden.

Auf diese Weise ist es möglich, eine gleichmäßige Rotationsbewegung zwischen dem ersten Messvorrichtungsteil und dem zweiten Messvorrichtungsteil hervorzurufen, um so eine laminare turbulenzfreie Strömung zu ermöglichen. Durch die Rotationssymmetrie kann vermieden werden, dass sich bedingt durch die Rotationsbewegung unterschiedliche Druckverhältnisse innerhalb des Volumens einstellen, in dem sich das zu messende Medium befindet.

Gemäß einer Ausführungsform der Erfindung umfasst die Drehbewegung eine Oszillationsbewegung.

Auf diese Weise kann eine Zuleitung bzw. Ableitung für Sensoren oder Aktuatoren an dem ersten Messvorrichtungsteil bzw. dem zweiten Messvorrichtungsteil vorgesehen werden, ohne der Problematik zu unterliegen, dass bei einer Rotation die Kontakte der entsprechenden Vorrichtungen nachgeführt werden müssen. Insbesondere die Zuführung und Abführung von Medienflüssen, wie Flüssigkeits- und Gasleitungen, kann vereinfacht werden, wenn keine umlaufende Drehbewegung, sondern eine Schwingungsdrehbewegung vorliegt.

Gemäß einer Ausführungsform der Erfindung weist die Oszillationsbewegung eine Sinusschwingung auf.

Auf diese Weise kann eine gleichmäßige Schwingungsbewegung zwischen dem ersten Messvorrichtungsteil und dem zweiten Messvorrichtungsteil bereitgestellt werden, die ein möglichst geringes Maß einer Beschleunigung des ersten Messvorrichtungsteils zu dem zweiten Messvorrichtungsteil oder umgekehrt aufweist. Ferner können die Messwerte, die bei einer Oszillationsbewegung zur Messung der Elastizität und der Viskosität ermittelt werden, einfach ausgewertet werden, wenn das Schwingungsverhalten möglichst einfach, das heißt in Form einer Sinusschwingung, abgebildet werden kann und somit die diesbezüglichen Effekte aus den Messwerten eliminiert werden können.

Gemäß einer Ausführungsform der Erfindung weist die Oszillationsbewegung eine Frequenz zwischen 0,01 Hz und 100 Hz auf.

Auf diese Weise kann unterschiedlichen Elastizitäts- und Viskositätseigenschaften des zu messenden Mediums Rechnung getragen werden, und über den angegebenen Frequenzbereich die Elastizität bzw. Viskosität des zu messenden Mediums ermittelt werden.

Gemäß einer Ausführungsform der Erfindung hat die Oszillationsbewegung eine Amplitude zwischen 1*10⁻⁶° und 180°.

Auf diese Weise können höchste Genauigkeiten bei der Messung der Elastizität und der Viskosität eines zu messenden Mediums erreicht werden. Gemäß einer Ausführungsform der Erfindung hat die Oszillationsbewegung eine Amplitude zwischen 5*10^{-5°} und 45°, wobei 360° einem vollen Kreisumfang entspricht. Die Oszillationsamplitude kann gemäß einer Ausführungsform iterativ an das zu messende Medium angepasst werden. Dazu kann die Veränderung eines gemessenen Drehmomentes an einem Messvorrichtungsteil über die Änderung der Oszillationsamplitude des anderen Messvorrichtungsteil als Grundlage verwendet werden, um einen Aktuator betreffend der Amplitude anzusteuern, der die Oszillationsbewegung hervorruft.

Gemäß einer Ausführungsform der Erfindung weist die Messvorrichtung einen Drehmomentaufnehmer auf, wobei der Drehmomentaufnehmer an einem von dem ersten Messvorrichtungsteil und dem zweiten Messvorrichtungsteil vorgesehen ist.

Auf diese Weise kann die Elastizität bzw. die Viskosität eines zu messenden Mediums durch die Ermittlung des Drehmoments ermittelt werden, welches notwendig ist, um den ersten Messvorrichtungsteil bezüglich des zweiten Messvorrichtungsteils in eine Drehbewegung zu versetzen, insbesondere in einer Oszillationsbewegung.

Gemäß einer Ausführungsform der Erfindung ist einer von dem ersten Messvorrichtungsteil und dem zweiten Messvorrichtungsteil gegenüber einem Bezugspunkt festgelegt und der Drehmomentaufnehmer an dem festgelegten von dem ersten Messvorrichtungsteil und dem zweiten Messvorrichtungsteil vorgesehen.

Auf diese Weise kann der Drehmomentaufnehmer unmittelbar das an dem entsprechenden Messvorrichtungsteil anliegende Drehmoment gegenüber dem Bezugspunkt ermittelt, ohne dass störende Einflüsse eines Aktuators die Messung der Elastizität bzw. der Viskosität beeinflussen. Dies gilt insbesondere für den Fall, bei dem der Aktuator an dem anderen Messvorrichtungsteil vorgesehen ist, der nicht gegenüber einem Bezugspunkt festgelegt ist, sondern sich gegenüber dem an dem Bezugspunkt festgelegten Messvorrichtungsteil um die vorgegebene Achse durch den Aktuator veranlasst in einer Drehbewegung bewegt.

Gemäß einer Ausführungsform der Erfindung weist der erste Messvorrichtungsteil im Bereich der Gasströmungsdichtung einen ersten Zylinderhülsenabschnitt und einen zweiten Zylinderhülsenabschnitt auf, und der zweite Messvorrichtungsteil weist im Bereich der Gasströmungsdichtung einen ersten Zylinderabschnitt und einen zweiten Zylinderabschnitt auf, wobei der erste Zylinderhülsenabschnitt und der erste Zylinderabschnitt einen ersten Zylinderspalt bilden und der zweite Zylinderhülsenabschnitt und der zweite Zylinderabschnitt einen zweiten Zylinderspalt bilden, wobei zwischen dem ersten Zylinderspalt und dem zweiten Zylinderspalt eine Druckgaszuführung vorgesehen ist.

Auf diese Weise ist es möglich, dass ein Druckgas so zugeführt wird, dass es über den Zylinderspalt, der in das Volumen mündet, zu einem Druckaufbau in dem Volumen kommt, und über den anderen Zylinderspalt eine Abströmung des Gases derart erfolgt, dass durch den Strömungswiderstand im anderen Zylinderspalt und der entsprechenden Gaszuführung es zu einem aufrecht erhaltenen Druck in dem Volumen kommt, in dem das zu messende Medium vorgesehen ist.

Gemäß einer Ausführungsform der Erfindung ist die Druckgaszuführung seitens des ersten Messvorrichtungsteils vorgesehen.

Auf diese Weise kann die Gaszuführung an dem Teil vorgesehen sein, der nicht mit dem Drehmomentaufnehmer verbunden ist, so dass durch die Ankopplung der Druckgaszuführung keine Beeinflussung der Drehmomentmessung an dem zweiten Messvorrichtungsteil auftritt, wenn der zweite Messvorrichtungsteil gegenüber dem Bezugspunkt festgelegt ist.

Gemäß einer Ausführungsform der Erfindung stellen der erste Zylinderhülsenabschnitt und der zweite Zylinderhülsenabschnitt des ersten Messvorrichtungsteils, sowie die Druckgaszuführung zusammen eine Einheit dar, die von einem Becher des ersten Messvorrichtungsteils, der zur Aufnahme des zu messenden Mediums vorgesehen ist, trennbar ist.

Auf diese Weise verbleibt zwar ein Teil des ersten Messvorrichtungsteils an dem zweiten Messvorrichtungsteil, jedoch kann auf diese Weise die Dichtungsgeometrie der Gasströmungsdichtung zwischen dem ersten und dem zweiten Messvorrichtungsteil beibehalten werden, die aus den Zylinderspalten besteht, die aus den Zylinderabschnitten des zweiten Messvorrichtungsteils und den Zylinderhülsenabschnitts des ersten Messvorrichtungsteils gebildet wird. Im Übrigen kann der zweite Messvorrichtungsteil, wenn dieser gegenüber einem Bezugspunkt festgelegt ist, an Ort und Stelle verbleiben, während der von der Druckgaszuführung abnehmbare Teil des ersten Messvorrichtungsteils, beispielsweise in Form eines Bechers, abgenommen werden kann. So kann ein Medium in dem Becher, der im Wesentlichen das Volumen zur Aufnahme des zu messenden Mediums darstellt, ausgetauscht werden.

Gemäß einer Ausführungsform der Erfindung mündet der zweite Zylinderspalt auf einer von der Druckgaszuführung abgewandten Seite in das Volumen, welches zur Aufnahme des zu messenden Mediums vorgesehen ist.

Auf diese Weise kann in dem Volumen durch die Zuführung von Druckgas durch den zweiten Zylinderspalt der Druck in dem Volumen aufrecht erhalten werden, so dass auch Medien in dem Volumen unter hohen Temperaturen bzw. hohen Drücken gehalten und gemessen werden können.

Gemäß einer Ausführungsform der Erfindung weist die Messvorrichtung eine Temperiervorrichtung auf, wobei das Volumen zur Aufnahme des zu messenden Mediums mit der Temperiervorrichtung temperierbar ist.

Auf diese Weise kann eine Temperatur in dem Volumen und somit eine Temperatur des zu messenden Mediums eingestellt werden. Dieses kann beispielsweise durch ein Peltierelement erfolgen, so dass in gewissem Maße sowohl eine Abkühlung als auch eine Aufheizung des Mediums erfolgen kann. Für größere Temperaturbereiche kann beispielsweise eine zusätzliche (oder alternativ eine) elektrische Heizung vorgesehen sein. Es sei angemerkt, dass auch weitere Temperiermechanismen zur Erhitzung oder Abkühlung verwendet werden können, beispielsweise durch die gezielte Zuführung einer Kühl- oder einer Heizflüssigkeit, bzw. eines Kühl- oder einer Heizgases.

Gemäß einer Ausführungsform der Erfindung weist die Temperiervorrichtung ein Peltierelement auf, welches derart ausgelegt und angeordnet ist, um das im Volumen aufgenommene zu messende Medium zu temperieren.

Die einzelnen oben beschriebenen Merkmale können selbstverständlich auch untereinander kombiniert werden, wodurch sich zum Teil auch vorteilhafte Wirkungen einstellen können, die über die Summe der Einzelwirkung hinausgehen.

Diese und andere Aspekte der vorliegenden Erfindung werden durch die Bezugnahme auf die hiernach beschriebenen beispielhaften Ausführungsformen erläutert und verdeutlicht.

### Kurze Beschreibung der Zeichnungen

Figur 1 zeigt eine Schnittansicht durch eine beispielhafte Ausführungsform einer Messvorrichtung.
Figur 2 zeigt einen Ausschnitt aus der Schnittansicht einer beispielhaften Ausführungsform der Messvorrichtung, die einen Gasströmungsdichtungsbereich zeigt.
Figur 3 zeigt einen Ausschnitt aus einer Schnittansicht einer beispielhaften Ausführungsform der Messvorrichtung, die das Volumen zur Aufnahme eines zu messenden Mediums zeigt.

### Detaillierte Beschreibung beispielhafter Ausführungsformen

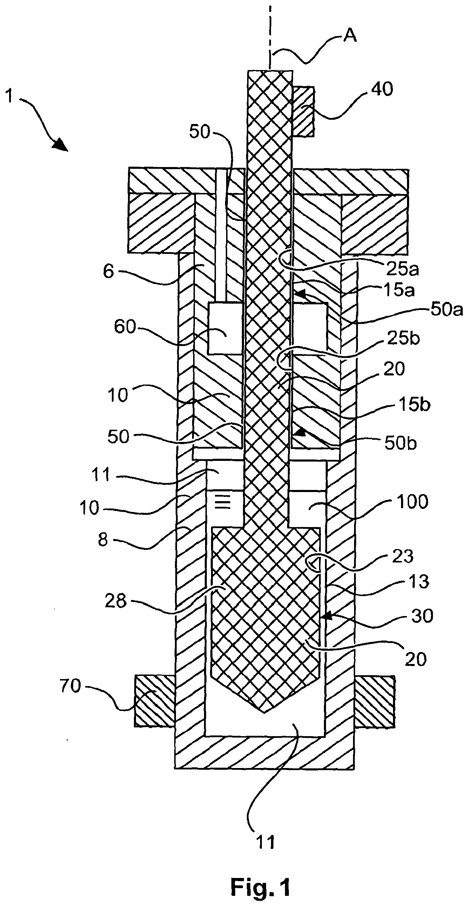

Figur 1 zeigt eine Schnittansicht durch eine Messvorrichtung gemäß einer beispielhaften Ausführungsform der Erfindung. Die in Figur 1 gezeigte Messvorrichtung weist einen ersten Messvorrichtungsteil 10 auf, der wiederum einen Becher 8 aufweist, in dem das Volumen 11 vorgesehen ist, in dem das zu messende Medium aufgenommen wird. In das zu messende Medium 100 taucht dabei der zweite Messvorrichtungsteil 20 ein, der in dem Bereich, in dem er in das zu messende Medium 100 eintaucht, einen Verdrängungskörper bzw. -zylinder 28 aufweist. Dieser Verdrängungszylinder kann zur Vermeidung von Sekundärströmungen im unteren Bereich spitz zulaufen, wie z.B. in DIN 53019-1 spezifiziert ist. Der erste Messvorrichtungsteil 10 und der zweite Messvorrichtungsteil 20 sind entlang einer Drehachse A zueinander drehbar. Dabei wird beispielsweise der zweite Messvorrichtungsteil 20 gegenüber einem Bezugspunkt festgelegt, und der erste Messvorrichtungsteil 10 gegenüber dem zweiten Messvorrichtungsteil 20 gedreht. Aufgrund der Drehung der beiden Teile zueinander kann über das anliegende Drehmoment eine rheologische Eigenschaft des zu messenden Mediums 100 ermittelt werden. Das Drehmoment wird bezüglich der Drehachse A auf den zweiten Messvorrichtungsteil 20 wirkt, beeinflusst durch die Flüssigkeitseigenschaft des zu messenden Mediums 100 zwischen einem Zylinderabschnitt 23 des zweiten Messvorrichtungsteils 20 im Volumen 11 einerseits und einem Hohlzylinderabschnitt 13 des ersten Messvorrichtungsteils 10 im Volumen 11. Auf diese Weise bilden der Hohlzylinderabschnitt 13 und der Zylinderabschnitt 23 einen Zylinderhülsenabschnitt, dessen Wände sich gegeneinander verdrehen. Aus dem sich daraus ergebenen Widerstand und folglich des anliegenden Drehmoments kann auf die rheologischen Eigenschaften des Mediums geschlossen werden kann, insbesondere auf die Elastizität und die Viskosität. Dabei kann ein Drehmomentaufnehmer 40 an dem zweiten Messvorrichtungsteil 20 vorgesehen sein, insbesondere wenn der zweite Messvorrichtungsteil bezüglich eines Bezugspunktes festgelegt ist. Dabei können unterschiedlichste Arten von Drehmomentaufnehmern verwendet werden, sofern diese in der Lage sind, ein Drehmoment zwischen dem zweiten Messvorrichtung 20 und dem Bezugspunkt zu ermitteln und hinreichend genau aufzulösen. Der Becher 8 bzw. das Volumen 11 können durch eine Temperiervorrichtung 70 temperiert werden. Diese Temperiervorrichtung 70 kann beispielsweise ein Peltierelement sein, mit dem der Becher 8 und damit das Volumen 11 sowohl erwärmt als auch gekühlt werden können. Für den Fall, dass lediglich eine Erwärmung des Volumens 11 erreicht werden soll, kann alternativ auch eine elektrische Heizvorrichtung vorgesehen sein. Es sei angemerkt, dass auch eine Kombination eines Peltierelements sowie einer elektrischen Widerstandsheizung verwendet werden kann, insbesondere wenn höhere Temperaturen erreicht werden sollen. Die Temperiervorrichtung kann im Speziellen so angeordnet sein, dass sie den Becher 8 an den Wandbereichen temperiert, die im Bereich des einzufüllenden Mediums liegen, d.h. auch entlang größerer Wandabschnitte, als in Figur 1 gezeigt. Um den ersten Messvorrichtungsteil 10 gegenüber dem zweiten Messvorrichtungsteil 20 im Wesentlichen reibungsfrei bzw. reibungsarm abzudichten, wird zwischen dem ersten Messvorrichtungsteil und dem zweiten Messvorrichtungsteil eine Gasströmungsdichtung 50 verwendet. Die Gasströmungsdichtung besteht im Wesentlichen darin, dass durch eine Druckgaszuführungseinheit 6 ein Druckgas über eine Druckgaszuführung 60 in Zylinderspalten 50a, 50b eingeleitet wird, die einerseits durch Zylinderhülsenabschnitte 15a, 15b des ersten Messvorrichtungsteils 10 und andererseits durch Zylinderabschnitte 25a, 25b des zweiten Messvorrichtungsteils 20 gebildet werden. Ausgehend von der Druckgaszuführung 60 wird ein zweiter Zylinderspalt 50b gebildet, der sich von der Druckgaszuführung 60 in Richtung des Volumens 11 erstreckt, wobei der zweite Zylinderspalt 50b durch den Zylinderhülsenabschnitt 15b des ersten Messvorrichtungsteils 10 gebildet wird, sowie durch den zweiten Zylinderabschnitt 25b des zweiten Messvorrichtungsteils 20. Ausgehend von der Druckgaszuführung 60 erstreckt sich ein erster Zylinderspalt 50a in die entgegengesetzte Richtung, wobei der erste Zylinderspalt 50a durch den ersten Zylinderhülsenabschnitt 15a des ersten Messvorrichtungsteils 10 und den ersten Zylinderabschnitt 25a des zweiten Messvorrichtungsteils 20 gebildet wird. Die Gasströmungsdichtung 50 erfolgt nun durch eine Zuführung eines Druckgases über die Druckgaszuführungseinheit 6 zu der Druckgaszuführung 60, wobei durch den zweiten Zylinderspalt 50b das Druckgas in Richtung des Volumens 11 strömt und in dem Volumen 11 einen Druck aufbaut. Ferner strömt das in der Druckgaszuführung 60 befindliche Gas in den ersten Zylinderspalt 50a, und verlässt auf diesem Wege die Messvorrichtung 1 (in Figur 1 nach oben). Durch den Strömungswiderstand in dem ersten Zylinderspalt 50a und dem Druck des nachströmenden Gases in der Druckgaszuführung stellt sich über den in der Druckgaszuführung einzustellenden Gasdruck ein Druck in dem Volumen 11 ein, so dass auf diese Weise eine Abdichtung des Volumens 11 gegenüber der äußeren Atmosphäre erreicht wird. Dabei erfolgt eine Gasströmung lediglich von der Druckgaszuführung 60 in den zweiten Zylinderspalt 50a hinein, während in Zylinderspalt 50b im Wesentlichen keine Gasströmung vorherrscht. Auf diese Weise kann der zweite Messvorrichtungsteil 20, insbesondere der Schaft des zweiten Messvorrichtungsteils 20, der aus dem ersten Messvorrichtungsteil 10 hinausführt und eine Ankopplung an den Bezugspunkt erlaubt, gegenüber dem ersten Messvorrichtungsteil 10 verlustarm geführt werden. Die Abdichtung durch die Gasströmungsdichtung 50 ist dabei sehr reibungsarm, so dass etwaige Einflüsse auf eine Drehmomentmessung an einem Drehmomentaufnehmer 40 bedingt durch einen hier nicht gezeigten Antrieb des ersten Messvorrichtungsteils 10 minimiert werden können. Der hier nicht gezeigte Antrieb versetzt den ersten Messvorrichtungsteil 10 in eine Drehbewegung, um die Drehachse A, während der zweite Messvorrichtungsteil 20 gegenüber dem Bezugspunkt festgelegt ist. Wie oben bereits angegeben sind mit der in Figur 1 gezeigten Messvorrichtung Messungen im Temperaturbereich von bis zu ca 200°C und im Druckbereich von bis zu ca 16 bar (absolut) möglich. Ein typischer Temperaturbereich ist ca 150°C und ein typischer Druckbereich ist ca 5 bar (absolut).

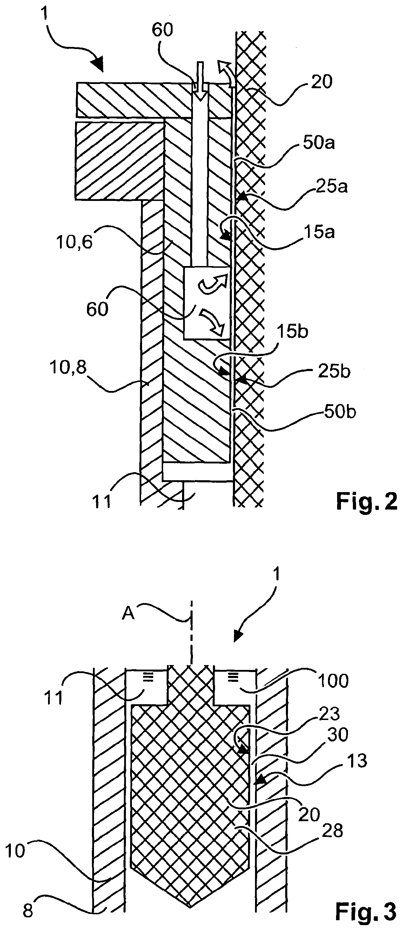

Figur 2 zeigt einen Ausschnitt aus der zuvor beschriebenen Ansicht, die insbesondere den Teil der Gasströmungsdichtung 50 zeigt. Aus Figur 2 ist nochmals erkennbar, dass Gas für die Gasströmungsdichtung durch die Druckgaszuführungseinheit 6 einströmt (Doppelpfeil) und dann in der Druckgaszuführung 60, beispielsweise einer ringförmigen Kammer, die um den entsprechenden Schaft des zweiten Messvorrichtungsteils 20 herum reicht, in die Zylinderspalte 50a und 50b einströmt. Dabei verteilt sich beim Druckaufbau zunächst die Gasströmung in einen Teil, der in dem zweiten Zylinderspalt 50b (in Figur 2 nach unten) einströmt, und einen Teil, der in dem ersten Zylinderspalt 50a (in Figur 2 nach oben) einströmt. Sobald in dem Volumen 11 der Druck aufgebaut ist, stellt sich durch die Zuführung des Druckgases in die Druckgaszuführung 60 und den durch den ersten Zylinderspalt 50a abströmenden Teil des Gases entlang des Schaftes des zweiten Messvorrichtungsteils 20 in dem Volumen 11 ein im Wesentlichen konstanter Druck ein. Dieser Druck kann eingestellt werden durch den Druck des Gases, der durch die Druckgaszuführungseinheit 6 zugeführt wird. Der erste Zylinderspalt 50a wird dabei gebildet durch einen ersten Zylinderabschnitt 25a des zweite Messvorrichtungsteils 20, sowie durch einen ersten Zylinderhülsenabschnitt 15a des ersten Messvorrichtungsteils 10. Der zweite Zylinderspalt 50b wird gebildet durch einen zweiten Zylinderabschnitt 25b des zweiten Messvorrichtungsteils 20, sowie einen zweiten Zylinderhülsenabschnitt 15b des ersten Messvorrichtungsteils 10. Der erste Zylinderhülsenabschnitt 15a und der zweite Zylinderhülsenabschnitt 15b können dabei beispielsweise an der Druckgaszuführungseinheit 6 vorgesehen sein, die für die Messung in dem Volumen 11 mit dem Becher 8 des ersten Messvorrichtungsteils 10 fest verbunden wird, jedoch für einen Wechsel des zu messenden Mediums 100 in dem Volumen 11 von dem Becher 8 gelöst werden kann. Die Druckgaszuführungseinheit 6 ist zwar gegenüber dem zweiten Messvorrichtungsteil 20 drehbar gelagert, verbleibt jedoch an diesem, wenn beispielsweise der Becher 8 abgenommen wird, um das zu messende Medium 100 im Becher 8 bzw. im Volumen 11 auszutauschen.

Figur 3 zeigt eine vergrößerte Schnittansicht im Bereich des Volumens 11, welches begrenzt wird durch den ersten Messvorrichtungsteil 10, insbesondere durch den Becher 8 des ersten Messvorrichtungsteils 10 einerseits und dem Verdrängungszylinder 28 des zweiten Messvorrichtungsteils 20. Der Verdrängungszylinder 28 weist einen Zylinderabschnitt 23 auf, während der Becher 8 einen Hohlzylinderabschnitt 13 aufweist. Zwischen dem Hohlzylinderabschnitt 13 und dem Zylinderabschnitt 23 wird ein Zylinderspalt 30 gebildet, in dem sich das zu messende Medium 100 befindet. Die Bewegung bzw. der Widerstand zwischen dem sich drehenden ersten Messvorrichtungsteil 10 und dem feststehenden Messvorrichtungsteil 20 wird im Wesentlichen geprägt durch die Eigenschaft der Flüssigkeit in dem Zylinderspalt 30. In Abhängigkeit von der dort verwendeten Flüssigkeit stellt sich bei einer eingeprägten Drehbewegung des ersten Messvorrichtungsteils 10 an dem zweiten Messvorrichtungsteil 20 ein Drehmoment ein, welches durch den Drehmomentaufnehmer 40, siehe Figur 1, ermittelt werden kann. Der Verdrängungszylinder 28 kann beispielsweise vom Teil 20 abschraubbar sein oder mit diesem einstückig verbunden sein.

Es sei angemerkt, dass der Begriff "umfassen", weitere Elemente oder Verfahrensschritte nicht ausschließt, ebenso wie der Begriff "ein" und "eine" mehrere Elemente und Schritte nicht ausschließt.

Die verwendeten Bezugszeichen dienen lediglich zur Erhöhung der Verständlichkeit und sollen keinesfalls als einschränkend betrachtet werden, wobei der Schutzbereich der Erfindung durch die Ansprüche wiedergegeben wird.

### Bezugszeichenliste

- 1: Messvorrichtung
- 6: Druckgaszuführungseinheit
- 8: Becher
- 10: erster Messvorrichtungsteil
- 11: Volumen zur Aufnahme eines Mediums
- 13: Hohlzylinderabschnitt des ersten Messvorrichtungsteils im Volumen
- 15a: erster Zylinderhülsenabschnitt des ersten Messvorrichtungsteils
- 15b: zweiter Zylinderhülsenabschnitt des ersten Messvorrichtungsteils
- 20: zweiter Messvorrichtungsteil
- 23: Zylinderabschnitt des zweiten Messvorrichtungsteils im Volumen
- 25a: erster Zylinderabschnitt des zweiten Messvorrichtungsteils
- 25b: zweiter Zylinderabschnitt des zweiten Messvorrichtungsteils
- 28: Verdrängungszylinder
- 30: Zylinderspalt im Volumen zur Aufnahme des zu messenden Mediums
- 40: Drehmomentaufnehmer
- 50: Gasströmungsdichtung
- 50a: erster Zylinderspalt
- 50b: zweiter Zylinderspalt
- 60: Druckgaszuführung
- 70: Temperiervorrichtung
- 100: zu messenden Mediums
- A: Achse, Drehachse

## Patentansprüche

1. Messvorrichtung zur Messung einer Elastizität und einer Viskosität eines Mediums, wobei die Messvorrichtung (1) aufweist:
ein durch einen ersten Messvorrichtungsteil (10) begrenztes Volumen (11) zur Aufnahme des zu messenden Mediums (100),
ein in das Volumen (11) einragender zweiter Messvorrichtungsteil (20), wobei
der erste Messvorrichtungsteil (10) zu dem zweiten Messvorrichtungsteil (20) relativ um eine vorgegebene Achse (A) in einer Drehbewegung bewegbar ist, **dadurch gekennzeichnet, dass**
der erste Messvorrichtungsteil (10) zu dem zweiten Messvorrichtungsteil (20) durch eine Gasströmungsdichtung (50) abgedichtet

2. Messvorrichtung gemäß Anspruch 1, wobei das Volumen (11) im Bereich, der zur Aufnahme des zu messenden Mediums (100) vorgesehen ist, rotationssymmetrisch ist und der zweite Messvorrichtungsteil (20) im Bereich, der in den Bereich des Volumens (11) einragt, der zur Aufnahme des zu messenden Mediums (100) vorgesehen ist, rotationssymmetrisch ist, wobei der erste Messvorrichtungsteil (10) einen Hohlzylinderabschnitt (13) und der zweite Messvorrichtungsteil (20) einen Zylinderabschnitt (23) aufweist, wobei der Hohlzylinderabschnitt (13) und der Zylinderabschnitt (23) in einem Bereich, der zur Aufnahme eines zu messenden Mediums (100) vorgesehen ist, einen Zylinderspalt (30) bilden.

3. Messvorrichtung gemäß einem der Ansprüche 1 und 2, wobei die Drehbewegung eine Oszillationsbewegung umfasst.

4. Messvorrichtung gemäß Anspruch 3,wobei die Oszillationsbewegung eine Sinusschwingung aufweist.

5. Messvorrichtung gemäß Anspruch 4,wobei die Oszillationsbewegung eine Frequenz zwischen 0,01 Hz und 100 Hz hat.

6. Messvorrichtung gemäß einem der Ansprüche 4 und 5,wobei die Oszillationsbewegung eine Amplitude zwischen 1*10^{-6°} und 180°, insbesondere zwischen 5*10^{-5°} und 45°hat.

7. Messvorrichtung gemäß einem der Ansprüche 1 bis 6,wobei die Messvorrichtung einen Drehmomentaufnehmer (40) aufweist, wobei der Drehmomentaufnehmer an einem von dem ersten Messvorrichtungsteil (10) und dem zweiten Messvorrichtungsteil (20) vorgesehen ist.

8. Messvorrichtung gemäß Anspruch 7,wobei einer von dem ersten Messvorrichtungsteil (10) und dem zweiten Messvorrichtungsteil (20) gegenüber einem Bezugspunkt festgelegt ist und der Drehmomentaufnehmer (40) an dem festgelegten von dem ersten Messvorrichtungsteil (10) und dem zweiten Messvorrichtungsteil (20) vorgesehen ist.

9. Messvorrichtung gemäß einem der Ansprüche 1 bis 8,wobei der erste Messvorrichtungsteil (10) im Bereich der Gasströmungsdichtung einen ersten Zylinderhülsenabschnitt (15a) und einen zweiten Zylinderhülsenabschnitt (15b) aufweist und der zweite Messvorrichtungsteil (20) im Bereich der Gasströmungsdichtung einen ersten Zylinderabschnitt (25a) und einen zweiten Zylinderabschnitt (25b) aufweist, wobei der erste Zylinderhülsenabschnitt (15a) und der erste Zylinderabschnitt (25a) einen ersten Zylinderspalt (50a) bilden und der zweite Zylinderhülsenabschnitt (15b)und der zweite Zylinderabschnitt (25b) einen zweiten Zylinderspalt (50b) bilden, wobei zwischen dem ersten Zylinderspalt (50a) und dem zweiten Zylinderspalt (50b) eine Druckgaszuführung (60) vorgesehen ist.

10. Messvorrichtung gemäß Anspruch 9,wobei die Druckgaszuführung (60) seitens des ersten Messvorrichtungsteils (10) vorgesehen ist.

11. Messvorrichtung gemäß Anspruch 10, wobei der erste Zylinderhülsenabschnitt (15a) und der zweite Zylinderhülsenabschnitt (15b) des ersten Messvorrichtungsteils (10), sowie die Druckgaszuführung (60) zusammen eine Einheit (6) darstellen, die von einem Becher (8) des ersten Messvorrichtungsteils (10) zur Aufnahme des zu messenden Mediums (100) trennbar ist.

12. Messvorrichtung gemäß einem der Ansprüche 9 bis 11,wobei der zweite Zylinderspalt (50b) auf einer von der Druckgaszuführung (60) abgewandten Seite in das Volumen (11) zur Aufnahme des zu messenden Mediums (100) mündet.

13. Messvorrichtung gemäß einem der Ansprüche 1 bis 12,wobei die Messvorrichtung (1) eine Temperiervorrichtung (70) aufweist und das Volumen (11) zur Aufnahme des zu messenden Mediums (100) mit der Temperiervorrichtung (70) temperierbar ist.

14. Messvorrichtung gemäß Anspruch 13,wobei die Temperiervorrichtung (70) ein Peltierelement aufweist, welches derart ausgelegt und angeordnet ist das Volumen (11) zur Aufnahme des zu messenden Mediums (100) zu temperieren.

## Claims

1. Measuring device for measuring an elasticity and a viscosity of a medium, wherein the measuring device (1) comprises:
A volume (11) delimited by a first measuring device part (10) for receiving the medium (100) which is to be measured,
a second measuring device part (20), projecting into the volume (11), wherein the first measuring device part (10) can be moved relative to the second measuring device part (20) about a predetermined axis (A) in a rotational movement, **characterized in that**
the first measuring device part (10) is sealed against the second measuring device part (20) by a gas flow seal (50).

2. Measuring device according to claim 1, wherein the volume (11) is rotationally symmetrical in the region which is provided for receiving the medium (100) which is to be measured, and the second measuring device part (20) is rotationally symmetrical in the region which projects into the region of the volume (11), which is provided for receiving the medium (100) which is to be measured, wherein the first measuring device part (10) comprises a hollow cylinder portion (13) and the second measuring device part (20) comprises a cylinder portion (23), wherein the hollow cylinder portion (13) and the cylinder portion (23) form a cylinder gap (30) in a region which is provided to receive a medium (100) which is to be measured.

3. Measuring device according to any one of claims 1 and 2, wherein the rotational movement comprises an oscillation movement.

4. Measuring device according to claim 3, wherein the oscillation movement comprises a sinusoidal oscillation.

5. Measuring device according to claim 4, wherein the oscillation movement has a frequency of between 0.01 Hz and 100 Hz.

6. Measuring device according to any one of claims 4 and 5, wherein the oscillation movement has an amplitude of between 1*10^{-6º} and 180º, in particular between
5*10^{-5º} and 45º.

7. Measuring device according to any one of claims 1 to 6, wherein the measuring device comprises a torque sensor (40), wherein the torque sensor is provided at either one of the first measuring device part (10) and the second measuring device part (20).

8. Measuring device according to claim 7, wherein either one of the first measuring device part (10) and the second measuring device part (20) is secured in relation to a reference point, and the torque sensor (40) is provided at the fixed one from between the first measuring device part (10) and the second measuring device part (20).

9. Measuring device according to any one of claims 1 to 8, wherein the first measuring device part (10) comprises, in the region of the gas flow seal, a first cylinder sleeve portion (15a) and a second cylinder sleeve portion (15b), and the second measuring device part (20) comprises, in the region of the gas flow seal, a first cylinder portion (25a) and a second cylinder portion (25b), wherein the first cylinder sleeve portion (15a) and the first cylinder portion (25a) form a first cylinder gap (50a), and the second cylinder sleeve portion (15b) and the second cylinder portion (25b) form a second cylinder gap (50b), wherein a pressurised gas delivery point (60) is provided between the first cylinder gap (50a) and the second cylinder gap (50b).

10. Measuring device according to claim 9, wherein the pressurised gas delivery point (60) is provided on the side of the first measuring device part (10).

11. Measuring device according to claim 10, wherein the first cylinder sleeve portion (15a) and the second cylinder sleeve portion (15b) of the first measuring device part (10), and the pressurised gas delivery point (60) together represent one unit (6), which can be separated from a cup-type container (8) of the first measuring device part (10) for receiving the medium (100) which is to be measured.

12. Measuring device according to any one of claims 9 to 11, wherein the second cylinder gap (50b) opens into the volume (11), on a side facing away from the pressurised gas delivery point (60), for receiving the medium (100) which is to be measured.

13. Measuring device according to any one of claims 1 to 12, wherein the measuring device (1) comprises a temperature control device (70), and the volume (11) for receiving the medium (100) which is to be measured can be temperature controlled by means of the temperature control device (70).

14. Measuring device according to claim 13, wherein the temperature control device (70) comprises a Peltier element, which is configured and arranged in such a way as to control the temperature of the volume (11) for receiving the medium (100) which is to be measured.

## Revendications

1. Dispositif de mesure pour mesurer une élasticité et une viscosité d'un milieu, le dispositif de mesure (1) comprenant :
un volume (11) délimité par une première partie de dispositif de mesure (10) pour recevoir le milieu (100) qui doit être mesuré,
une seconde partie de dispositif de mesure (20) qui se projette dans le volume (11), la première partie de dispositif de mesure (10) pouvant être déplacée par rapport à la seconde partie de dispositif de mesure (20) autour d'un axe prédéterminé (A) dans un mouvement de rotation,
**caractérisé en ce que** :
la première partie de dispositif de mesure (10) est étanchéifiée contre la seconde partie de dispositif de mesure (20) par un joint d'écoulement de gaz (50).

2. Dispositif de mesure selon la revendication 1, dans lequel le volume (11) est symétrique en rotation dans la région qui est prévue pour recevoir le milieu (100) qui doit être mesuré et la seconde partie de dispositif de mesure (20) est symétrique en rotation dans la région qui se projette dans la région du volume (11), qui est prévue pour recevoir le milieu (100) qui doit être mesuré, la première partie de dispositif de mesure (10) comprenant une section formant cylindre creux (13) et la seconde partie de dispositif de mesure (20) comprenant une section formant cylindre (23), la section formant cylindre creux (13) et la section formant cylindre (23) formant un espace cylindrique (30) dans une région qui est prévue pour recevoir un milieu (100) qui doit être mesuré.

3. Dispositif de mesure selon l'une quelconque des revendications 1 et 2, dans lequel le mouvement de rotation comprend un mouvement d'oscillation.

4. Dispositif de mesure selon la revendication 3, dans lequel le mouvement d'oscillation comprend une oscillation sinusoïdale.

5. Dispositif de mesure selon la revendication 4, dans lequel le mouvement d'oscillation a une fréquence comprise entre 0,01 Hz et 100 Hz.

6. Dispositif de mesure selon l'une quelconque des revendications 4 et 5, dans lequel le mouvement d'oscillation a une amplitude comprise entre 1*10-6º et 180º, en particulier entre 5*10-5º et 45º.

7. Dispositif de mesure selon l'une quelconque des revendications 1 à 6, le dispositif de mesure comprenant un capteur de couple (40), le capteur de couple étant situé au niveau de la première partie de dispositif de mesure (10) ou de la seconde partie de dispositif de mesure (20).

8. Dispositif de mesure selon la revendication 7, dans lequel la première partie de dispositif de mesure (10) ou la seconde partie de dispositif de mesure (20) est fixée par rapport à un point de référence et le capteur de couple (40) est situé au niveau de la partie fixe entre la première partie de dispositif de mesure (10) et la seconde partie de dispositif de mesure (20).

9. Dispositif de mesure selon l'une quelconque des revendications 1 à 8, dans lequel la première partie de dispositif de mesure (10) comprend, dans la région du joint d'écoulement de gaz, une première section formant chemise de cylindre (15a) et une seconde section formant chemise de cylindre (15b) et dans lequel la seconde partie de dispositif de mesure (20) comprend, dans la région du joint d'écoulement de gaz, une première section formant cylindre (25a) et une seconde section formant cylindre (25b), la première section formant chemise de cylindre (15a) et la première section formant cylindre (25a) formant un premier espace cylindrique (50a) et la seconde section formant chemise de cylindre (15b) et la seconde section formant cylindre (25b) formant un second espace cylindrique (50b), un point de distribution de gaz pressurisé (60) étant situé entre le premier espace cylindrique (50a) et le second espace cylindrique (50b).

10. Dispositif de mesure selon la revendication 9, dans lequel le point de distribution de gaz pressurisé (60) est situé sur le côté de la première partie de dispositif de mesure (10).

11. Dispositif de mesure selon la revendication 10, dans lequel la première section formant chemise de cylindre (15a) et la seconde section formant chemise de cylindre (15b) de la première partie de dispositif de mesure (10) et le point de distribution de gaz pressurisé (60) représentent conjointement une unité (6) qui peut être séparée d'un contenant de type coupelle (8) de la première partie de dispositif de mesure (10) pour recevoir le milieu (100) qui doit être mesuré.

12. Dispositif de mesure selon l'une quelconque des revendications 9 à 11, dans lequel le second espace cylindrique (50b) s'ouvre dans le volume (11), sur un côté orienté à l'opposé du point de distribution de gaz pressurisé (60), pour recevoir le milieu (100) qui doit être mesuré.

13. Dispositif de mesure selon l'une quelconque des revendications 1 à 12, le dispositif de mesure (1) comprenant un dispositif de régulation de température (70) et le volume (11) pour recevoir le milieu (100) qui doit être mesuré pouvant être régulé en température au moyen du dispositif de régulation de température (70).

14. Dispositif de mesure selon la revendication 13, dans lequel le dispositif de régulation de température (70) comprend un élément Peltier, qui peut être configuré et agencé de façon à réguler la température du volume (11) pour recevoir le milieu (100) qui doit être mesuré.
